Europäisches Patentamt

(19) European Patent Office

Office européen des brevets

(11) EP 0 856 732 A1

(12) EUROPEAN PATENT APPLICATION

(43) Date of publication:
05.08.1998 Bulletin 1998/32

(51) Int. Cl.6: G01N 27/407

(21) Application number: 98300700.6

(22) Date of filing: 30.01.1998

(84) Designated Contracting States:
AT BE CH DE DK ES FI FR GB GR IE IT LI LU MC
NL PT SE
Designated Extension States:
AL LT LV MK RO SI

(30) Priority: 30.01.1997 KR 9702862

(71) Applicant:
SAMSUNG ELECTRO-MECHANICS Co. Ltd.
Suwon-city, Kyungki-do (KR)

(72) Inventors:
• Kim, Byung-ki
  Kunpo-city, Kyungki-do (KR)
• Kim, HO-in
  Yongin-city, Kyungki-do (KR)
• Lee, Kyo-yeol
  Yongin-city, Kyungki-do (KR)

(74) Representative:
Finnie, Peter John
Elkington and Fife,
Prospect House,
8 Pembroke Road
Sevenoaks, Kent TN13 1XR (GB)

(54) A limiting current sensor for detecting deterioration in a 3-way catalyst

(57) A limiting current sensor used in detecting deterioration in a 3-way catalyst used for purifying exhaust gases of an automobile includes a solid electrolyte layer (41) conductive to oxygen ions, two electrodes (42,43) formed at the solid electrolyte layer (41), and first and second diffusion controlling barriers (44,45) formed on the two electrodes. The sensor shows the output characteristic which is proportional to the gross amount of $O_2$, CO, HC or $H_2$, irrespective of whether the fuel is lean or rich. Thus, the degree of deterioration of a catalyst can be detected quantitatively.

FIG. 4

EP 0 856 732 A1

Printed by Xerox (UK) Business Services
2.16.3/3.4

## Description

The present invention relates to a limiting current sensor, and more particularly, to a limiting current sensor used in detecting the degree of deterioration in a 3-way catalyst used for purifying the exhaust gases of an automobile.

In the exhaust gases of automobiles, toxic gases such as hydrocarbon, carbon monoxide or nitrogen oxide, are contained. Thus, a 3-way catalyst for eliminating the toxic gases is generally employed in an automobile. In the case when the catalyst is normally operated, the toxic gases contained in the exhaust gases are almost removed. However, in the case when the catalyst is deteriorated, the toxic gases are not sufficiently removed and are exhausted to the air. In this regard, it is necessary to detect the degree of deterioration in a catalyst. To detect the degree of deterioration of the catalyst, lambda sensors are installed in front of and in the rear of the catalyst, and sensing signals thereof are compared with each other to thereby determine the degree of deterioration of the catalyst by a difference therebetween.

However, in spite of the advantages of the lambda sensor, that is to say, its simple structure and low cost, since this sensor shows abrupt change of signal at a stoichiometric point where $\lambda = 1$ (Theoretical air-to-fuel (A/F) ratio = 14.7), almost similar signals are shown once the catalyst is deteriorated to a degree. Thus, it is impossible to measure the degree of further deterioration.

Therefore, there has been proposed a method for detecting the degree of deterioration in a catalyst by installing a wide-range A/F ratio sensor used for detecting the A/F ratio in a wide area ranging from a fuel-rich region to a fuel-lean region (Society of Automotive Engineers of USA (SAE) 920234).

The wide-range A/F ratio sensor is a sensor with improved general limiting current sensor. i.e., the limiting current sensor combined with a sensing cell, which can detect an A/F ratio in a wide area ranging from a fuel-rich region to a fuel-lean region by changing appropriately the direction and magnitude of applied voltages according to A/F ratios.

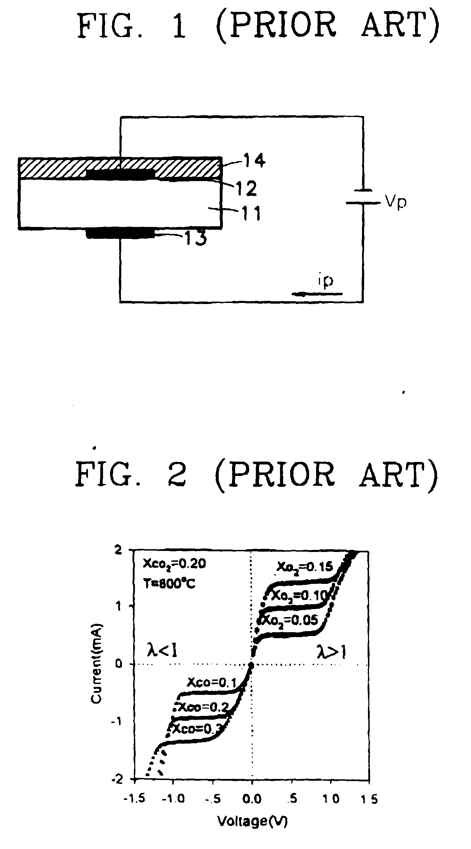

The general limiting current sensor utilizes the phenomenon that the amount of the oxygen pumped from an electrolyte layer by the applied voltages is limited by the amount of the gas diffused into an electrode layer through a diffusion controlling barrier, and is schematically shown in FIG. 1.

The limiting current sensor shown in FIG. 1 includes a solid electrolyte layer 11 formed of YSZ (Yttria Stabilized Zirconia), electrodes 12 and 13 each formed at both sides of the solid electrolyte layer 11, and a diffusion controlling barrier 14 installed the electrode 12 and having a gas diffusion controlling capacity.

FIG. 2 is a graph illustrating the current-to-voltage characteristic measured by the limiting current sensor in the fuel-lean region and the fuel-rich region. The outputs of the limiting currents are represented by the following equations (1) and (2) in the case of the fuel-lean region and the fuel-rich region, respectively:

$$Ip=(4FD_1 S/RTL) \times P_1 \qquad (1)$$

$$Ip=(2FD_2 S/RTL) \times P_2 \qquad (2)$$

where F is a Faraday constant, $D_1$ is a diffusion coefficient of $O_2$, $D_2$ is a diffusion coefficient of CO, S is a sectional area of a gas diffusion furnace, L is a length of the gas diffusion furnace, R is a gas constant, T is an absolute temperature, $P_1$ is a partial pressure of $O_2$, and $P_2$ is a partial pressure of CO.

As shown in the above graph, there is a section in which the current value is constant in spite of increase in voltages. The absolute value of the current increases in proportion to the oxygen concentration in the fuel-lean region where $\lambda > 1$, and increases in proportion to the CO concentration in the fuel-rich region where $\lambda < 1$. Thus, the output signal can be obtained in proportion to the degree of deterioration, by using these characteristics in detecting catalyst deterioration. However, as described above, in the case of the limiting current sensor, it is necessary to change the direction of applied voltages according to whether the fuel is lean or rich.

Accordingly, the wide-range A/F ratio sensor has been proposed. The wide-range A/F ratio sensor includes a limiting current sensor and a sensing cell, and further includes a separate driving circuit for changing appropriately the direction and magnitude of voltages according to A/F ratios.

This sensor exhibits linear output characteristics according to A/F ratios. Thus, the degree of deterioration in a catalyst can be detected quantitatively by using the sensor (SAE 920234).

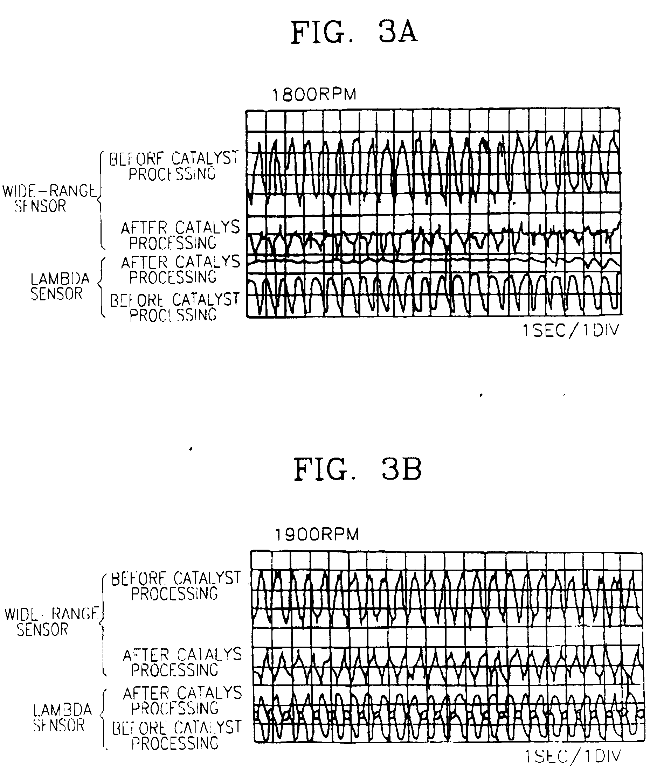

FIGs. 3A through 3C showing experimental data cited in the reference (SAE 920234), are graphs for comparing output characteristics shown in the case of using the lambda sensor and the wide-range A/F ratio sensor in detecting the degree of deterioration in a catalyst.

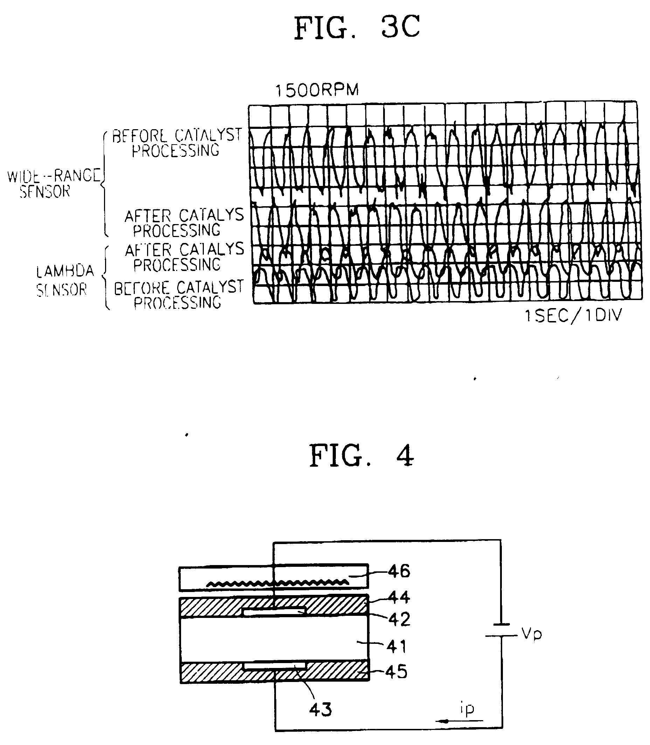

Here, FIGs. 3A, 3B and 3C show output signals representing the wide-range A/F ratio sensor and the lambda sensor in the cases of 80%, 50% and 10% in catalyst efficiencies. The severe the catalyst is deteriorated (the lower the catalyst efficiency is), the wide-range A/F ratio sensor shows a noticeable increase in output signals while the lambda sensor shows a small change in output signals. Therefore it is understood that the wide-range A/F ratio sensor has a sensing characteristic more suitable for detecting the degree of deterioration in a catalyst than the lambda sensor.

However, compared to the sensor for detecting the A/F ratio, the sensor for detecting the degree of deterioration in a catalyst has only to obtain linear sensing signals for the absolute amount of the fuel irrespective of whether the fuel is lean or rich. Thus, the wide-range A/F ratio sensor is not suitable for detecting the degree of deterioration in a catalyst. In other words, the wide-range A/F ratio sensor cannot avoid adopting a very complex structure in view of operational principles. Also, since a separate driving circuit is necessary, it is not easy to adopt the wide-range A/F ratio sensor in view of a cost problem.

According to the present invention, a limiting current sensor comprises a solid electrolyte layer conductive to oxygen ions, two electrodes formed at the solid electrolyte layer, and first and second diffusion controlling barriers formed on the two electrodes.

The two electrodes may be formed on opposing sides of the solid electrolyte layer, or both of them may be formed on one side of the solid electrolyte layer.

Preferably, the first diffusion controlling barrier is formed on a cathode of the two electrodes, and the second diffusion controlling barrier is formed on an anode of the two electrodes. The structure of the second diffusion controlling barrier is denser than that of the first diffusion controlling barrier, which makes it more difficult to be diffused, so that almost the same sensing efficiency is maintained in the fuel-lean region $\lambda > 1$) and the fuel-rich region ($\lambda < 1$).

The limiting current sensor according to the present invention is improved to exhibit the output characteristics similar to those of the wide-range A/F ratio sensor while employing the simplified structure and driving method of the conventional limiting current sensor, based on the operational principles of the conventional limiting current sensor.

In the sensor according to the present invention, if a constant voltage is applied to one electrode as a cathode and the other electrode as an anode, the output of the limiting current corresponding to the degree of deterioration in a 3-way catalyst. In other words, the limiting current proportional to the amount of oxygen contained in the exhaust gas is generated in the fuel-lean region by the diffusion barrier of the cathode, while the limiting current proportional to the amount of a reduction gas such as carbon monoxide is generated in the fuel-rich region by the diffusion barrier of the anode.

Therefore, the degree of deterioration in a catalyst can be detected by installing the sensor according to the present invention in the rear of the catalyst used for purifying the exhaust gases of an automobile.

The limiting current sensor according to the present invention can exhibit output characteristics similar to those of the wide-range A/F ratio sensor with a much simpler structure, by installing diffusion controlling barriers on two electrodes formed on the solid electrolyte layer, compared to the conventional wide-range A/F ratio sensor in which a separate driving circuit is employed for changing the polarity of an electrode depending on whether the fuel is lean or rich.

Preferably, the diffusion controlling barrier of the anode is constructed more strictly than the diffusion controlling barrier of the cathode. The reduction gas of the fuel-rich region ($\lambda < 1$) contains CO and $H_2$. Since the diffusion speed of such a reduction gas is faster than that of the remnant oxygen, the second diffusion controlling barrier for limiting the diffusion of the reduction gas must be constructed more strictly than the first diffusion controlling barrier for limiting the diffusion of oxygen, so that almost the same sensing efficiency can be maintained in the fuel-rich region and the fuel-lean region.

An example of the present invention will now be described in detail with reference to the accompanying drawings, in which:

FIG. 1 is a schematic diagram illustrating a conventional limiting current sensor;

FIG. 2 is a graph illustrating the current (Ip)-to-voltage (Vp) characteristic according to the gas concentration in the conventional limiting current sensor;

FIGs. 3A through 3C are graphs for comparing the detection characteristics of deterioration in a catalyst by a lambda sensor and a wide-range air-to-fuel sensor, in case when rpm is 1800 (catalyst efficiency: 80%), 1900 (catalyst efficiency: 50%) and 1500 (catalyst efficiency: 10%), respectively;

FIG. 4 is a schematic diagram of a limiting current sensor according to an embodiment of the present invention:

FIGs. 5A and 5B are graphs for comparing the limiting current characteristics according to diffusion controlling barriers in the sensor of the present invention; and,

FIG. 6 is a graph for comparing operational characteristics of engines employing the sensor according to the present invention and the lambda sensor.

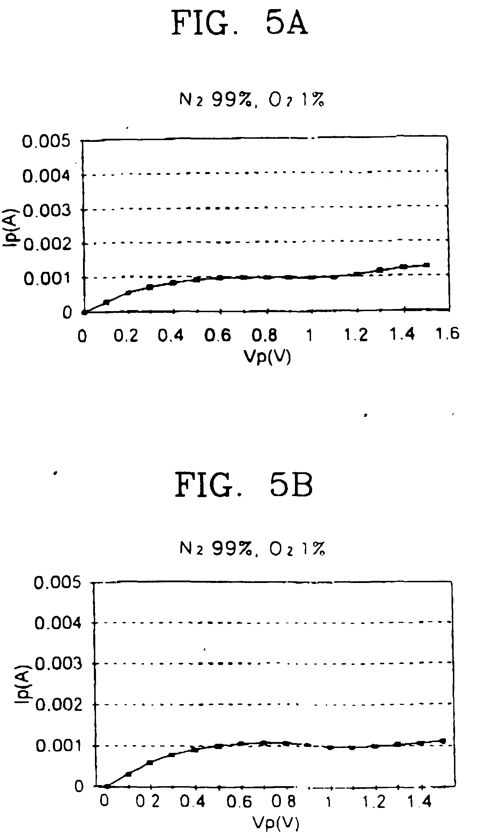

Referring to FIG. 4, the sensor according to the present invention includes a flat-panel solid electrolyte layer 41 formed of YSZ (Yttria Stabilized Zirconia) having an oxygen ion conductivity, electrodes 42 and 43 each formed on both sides of the solid electrolyte layer 41, and diffusion controlling barriers 44 and 45 each formed on the electrodes 42 and 43, and a heater 46 for heating a sensor.

Example

A platinum (Pt) electrode (2×4mm) was printed on both sides of one tip of a yttria-stabilized zirconia (YSZ) green sheet (4×50×1mm). A 0.5mm wide Pt electrode was printed on the green sheet up to the other tip to be connected with a lead wire. As a gas diffusion controlling barrier, 0.5mm thick porous green sheets (30wt% of alumina having an average diameter of 1.0μm and 70wt% of YSZ having an average diameter of 0.05μm) were installed to sufficiently cover the Pt electrodes. Then, a Pt lead wire was attached and sintered at 1450° C for 2 hours, thereby fabricating the sensor shown in FIG 4.

The heater for heating the sensor was fabricated by printing a Pt heater pattern on an alumina green sheet ($4\times50\times1mm$) and sintering the same at 1500° C for 2 hours. The sensor and the heater were combined and cased to then measure the operational characteristics using a practically used automobile engine.

FIGs. 5A and 5B show limiting current characteristics of a diffusion controlling barrier. The polarity of an electrode was changed in 1 % of $O_2$ to then measure the limiting current. FIGs. 5A and 5B show almost the same value of the limiting current in the cases of using the electrodes 42 and 43 as the cathodes, respectively. In other words, almost the same value of about 1 mA is shown with respect to two diffusion controlling barriers, from which it is understood that the two diffusion controlling barriers have a similar capacity for suppressing gas diffusion and that the amount of the limiting current is enough to dissolve the gases of a concentration for around a stoichiometric point ($\lambda = 1$).

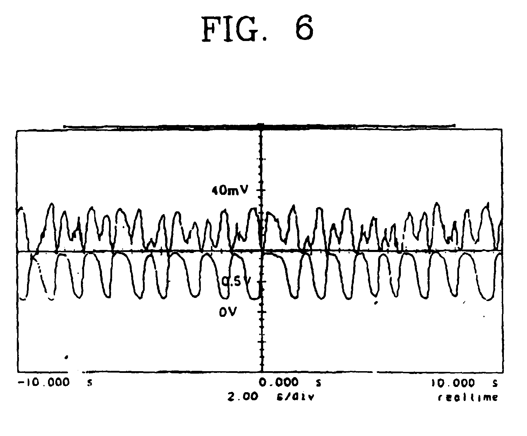

FIG. 6 shows the operational characteristics shown when the limiting current sensor according to the present invention is installed in an engine. The voltage was measured using an oscilloscope. To measure the current values indicated by the sensor according to the present invention, a serial resistance of $150\Omega$ was fixed and a voltage drop at this resistance was measured indirectly. Here, the voltage applied to the sensor was 0.5V. Also, in terms of the objective of the present invention for providing a sensor which can replace the wide-range A/F ratio sensor in detecting deterioration in a catalyst, the sensor constructed according to this embodiment of the present invention was installed next to the lambda sensor installed in front of the catalyst for the experimental convenience' sake, and then the operational characteristics were compared.

The waveform shown in the upper portion of the graph of FIG. 6 is for the output signal of the sensor according to the present invention, and the waveform shown in the lower portion of the graph of FIG. 6 is for the output signal of the lamoda sensor. As described above, the output signal of the lambda sensor shows that the A/F ratio of the engine fluctuates between the fuel-lean and fuel-rich conditions around a point where $\lambda = 1$.

The sensing signal of the present invention is different from that of the wide-range A/F ratio sensor shown in FIGs. 3A through 3C. i.e., the signal before processing with the catalyst) in that the sensing signal by the sensor according to the present invention is a positive value even when the A/F ratio indicates the fuel-rich condition. However, the signals sensed by both sensors are not greatly different from each other in that they are both proportional to the gas amount. Therefore, the sensor according to the present invention is particularly useful to detect the gross amount of the exhaust gases, irrespective of kinds of gases, i,e., $O_2$, CO, HC or $H_2$.

The amount of $O_2$, CO, HC and $H_2$ contained in the exhaust gas passing through a catalyst increases in proportion to the degree of deterioration in the catalyst. The gross amount of these gases is detected by the sensor of the present invention. Then, since the sensing signal represents the degree of deterioration in the catalyst quantitatively as in the sensing signal of the wide-range A/F ratio sensor, the degree of deterioration in the catalyst can be detected simply.

As described above, the limiting current sensor according to the present invention can solve the problem of economical inefficiency which is involved in the conventional wide-range A/F ratio sensor, that is, a complex structure and a cost increase due to the need of a separate driving circuit for changing the direction and magnitude of voltages according to A/F ratios, while exhibiting linear output characteristics depending on A/F ratios, which is one of advantages of the wide-range A/F ratio sensor.

**Claims**

1. A limiting current sensor comprising:

   a solid electrolyte layer (41) conductive to oxygen ions;
   two electrodes (42,43) formed at the solid electrolyte layer (41); and,
   first and second diffusion controlling barriers (44,45) formed on the two electrodes.

2. A limiting current sensor according to claim 1, wherein the solid electrolyte layer (41) is flat-panel shaped.

3. A limiting current sensor according to claim 1 or 2, wherein the two electrodes (42,43) are both formed on one side of the solid electrolyte layer (41).

4. A limiting current sensor according to claim 1 or 2, wherein the two electrodes (42,43) are formed on opposite sides of the solid electrolyte layer (41).

5. A limiting current sensor according to claim 4, wherein the first diffusion controlling barrier (44) is formed on a cathode of the two electrodes, and the second diffusion controlling barrier (45) is formed on an anode of the two electrodes, and the structure of the second diffusion controlling barrier is denser than that of the first diffusion controlling barrier, so that almost the same sensing efficiency is maintained in the fuel-lean region and the fuel-rich region.

# FIG. 1 (PRIOR ART)

# FIG. 2 (PRIOR ART)

# FIG. 3A

1800RPM

WIDE-RANGE SENSOR { BEFORE CATALYST PROCESSING / AFTER CATALYS PROCESSING

LAMBDA SENSOR { AFTER CATALYS PROCESSING / BEFORE CATALYST PROCESSING

1SEC/1DIV

# FIG. 3B

1900RPM

WIDE-RANGE SENSOR { BEFORE CATALYST PROCESSING / AFTER CATALYS PROCESSING

LAMBDA SENSOR { AFTER CATALYS PROCESSING / BEFORE CATALYST PROCESSING

1SEC/1DIV

# FIG. 3C

1500RPM

WIDE-RANGE SENSOR
{ BEFORE CATALYST PROCESSING
{ AFTER CATALYS PROCESSING

LAMBDA SENSOR
{ AFTER CATALYS PROCESSING
{ BEFORE CATALYST PROCESSING

1SEC/1DIV

# FIG. 4

46
44
42
41
45
43
Vp
ip

# FIG. 5A

N₂ 99%, O₂ 1%

# FIG. 5B

N₂ 99%, O₂ 1%

FIG. 6

European Patent
Office

**EUROPEAN SEARCH REPORT**

Application Number

EP 98 30 0700

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 006, no. 121 (P-126), 6 July 1982 & JP 57 048648 A (TOYOTA MOTOR CORP;OTHERS: 01), 20 March 1982, | 1,2,4,5 | G01N27/407 |
| Y | * abstract * | 3 | |
| Y | LALAUZE R ET AL: "A NEW TYPE OF MIXED POTENTIAL SENSOR USING A THICK FILM OF BETA-ALUMINA" SENSORS AND ACTUATORS B, vol. B13, no. 1 / 03, 1 May 1993, pages 241-243, XP000382708 * page 242, right-hand column, last paragraph - page 243, left-hand column, paragraph 1; figure 5 * | 3 | |
| X | US 5 507 174 A (FRIESE KARL-HERMANN ET AL) | 1,2,4 | |
| A | * column 3, line 50 - column 4, line 59; figures 1,2 * | 5 | |
| P,X | GB 2 313 671 A (ELECTROVAC) * abstract; figure 3 * | 1,2,4,5 | TECHNICAL FIELDS SEARCHED (Int.Cl.6) G01N F01N |
| A | PATENT ABSTRACTS OF JAPAN vol. 009, no. 257 (P-396), 15 October 1985 & JP 60 107560 A (TOYOTA JIDOSHA KK), 13 June 1985, * abstract * | 1,2,4,5 | |

The present search report has been drawn up for all claims

| Place of search | Date of completion of the search | Examiner |
|---|---|---|
| THE HAGUE | 17 April 1998 | Sideris, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03 82 (P04C01)